# FASCICULE DE BREVET EUROPEEN

(11) **EP 3 934 106 B1**
(45) Date de publication et mention de la délivrance du brevet: **22.11.2023**
(21) Numéro de dépôt: 21181332.4
(22) Date de dépôt: 24.06.2021
(51) Int. Cl.: H04B 3/54

(54) **PROCÉDÉ DE TRANSMISSION EN BANDE ÉTENDUE ENTRE DEUX DISPOSITIFS VOISINS D'UN RÉSEAU**
VERFAHREN ZUR BREITBANDÜBERTRAGUNG ZWISCHEN ZWEI BENACHBARTEN VORRICHTUNGEN IN EINEM NETZWERK
METHOD FOR TRANSMISSION ON AN EXTENDED BAND BETWEEN TWO NEIGHBOURING DEVICES OF A NETWORK

(30) Priorité: 01.07.2020 FR 2006945
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); BARTHES, Julien, 92500 RUEIL MALMAISON (FR); TERRIEN, Clément, 92500 RUEIL MALMAISON (FR)
(74) Mandataire: Cabinet Le Guen Maillet

(56) Documents cités:
- EP-A1- 3 104 569
- CN-A- 109 039 378
- US-A1- 2012 134 395
- US-A1- 2014 105 313
- Warranties No ET AL: "HomePlug AV Specification Contents", IN NO EVENT SHALL THE AUTHORS, DISTRIBUTORS, OR ANY COPYRIGHT HOLDERS BE LIABLE FOR ANY CLAIM, DAMAGES OR ANY LIABILITY, WHETHER IN AN ACTION OF CONTRACT, TORT OR OTHERWISE, ARISING FROM, OUT OF OR IN CONNECTION WITH THE SPECIFICATION OR THE USE OR O, 21 February 2014 (2014-02-21), pages 1-858, XP055876383, Retrieved from the Internet: URL:https://docbox.etsi.org/Reference/home plug_av21/homeplug_av21_specification_fina l_public.pdf [retrieved on 2022-01-05]

## Description

### DOMAINE TECHNIQUE

Au moins un mode de réalisation de la présente invention concerne un procédé de transmission d'un message à partir d'un premier dispositif noeud vers un second dispositif noeud appartenant à un voisinage réseau du premier dispositif noeud, lesdits premier et second dispositifs noeuds appartenant à un réseau utilisant des communications par courants porteurs en ligne. Au moins un mode de réalisation de la présente invention concerne un dispositif mettant en oeuvre le procédé.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Toutefois, la norme G3-PLC ne permet l'utilisation que d'une seule desdites bandes fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle. Des exemples d'antériorité peuvent être trouvés dans US 2012/134395 et "HomePlug AV Spécification Contents",21 février 2014 (2014-02-21).

Or, les besoins en termes de ressources des réseaux de communication, notamment dans le déploiement des réseaux d'alimentation électrique de type AMM, grandissent de jour en jour. La bande fréquentielle pour laquelle les éléments constitutifs d'un réseau ont été certifiés peut se retrouver en limite de capacité, ce qui fait obstacle à une augmentation du nombre d'échanges dans le réseau, par exemple pour introduire de nouvelles fonctionnalités ou encore de nouveaux besoins applicatifs, par exemple.

Il est souhaitable de pallier ces différents inconvénients de l'état de la technique. Il est ainsi notamment souhaitable de proposer une solution de communication par courant porteur en ligne permettant d'augmenter la capacité de nombre d'échanges dans le réseau de communication. Il est notamment souhaitable de proposer une solution applicable aux réseaux d'alimentation électrique de type AMM.

### EXPOSE DE L'INVENTION

A cet effet, l'invention a pour objet un procédé de transmission de données dans un réseau de communication par courants porteurs en ligne, le procédé étant exécuté dans un premier dispositif noeud du réseau configuré pour communiquer dans une pluralité de bandes fréquentielles disjointes avec un second dispositif noeud du réseau, le procédé étant tel que le premier dispositif noeud applique un mode de transmission dans une bande fréquentielle dite « bande fréquentielle étendue », la bande fréquentielle étendue comprenant au moins deux bandes fréquentielles parmi ladite pluralité de bandes fréquentielles disjointes, chaque bande fréquentielle disjointe comprenant une pluralité de sous-porteuses,
et le procédé comprenant des étapes :
- répartir en plusieurs groupes de données, via une opération d'entrelacement, des données à transmettre dans la bande fréquentielle étendue, chaque groupe étant attribué à une seule des au moins deux bandes fréquentielles disjointes, et des données de chacun des groupes étant attribuées à chacune des sous porteuses de la bande fréquentielle à laquelle le groupe est attribué,
- transmettre les données de chacun des plusieurs groupes de données dans la bande fréquentielle disjointe auquel le groupe est attribué de sorte que la transmission des données soit opérée conjointement sur l'ensemble des sous-porteuses des au moins deux bandes fréquentielles.

Les termes « bande fréquentielle disjointe » désignent ici une bande fréquentielle disjointe d'une autre bande fréquentielle.

Avantageusement, il est ainsi possible d'exploiter plusieurs bandes fréquentielles simultanément tout en adressant les moyens matériels utilisés en faisant référence à une bande fréquentielle étendue, de façon similaire à ce qui est réalisé pour des communications dans une bande fréquentielle unique.

Les avantages découlant d'une utilisation simultanée de plusieurs bandes fréquentielles sont par exemple, une augmentation de la vitesse moyenne des transmissions entre deux noeuds voisins, et donc plus largement, à travers le réseau de communication, une répartition optimisée de la charge du réseau sur plusieurs bandes fréquentielles, et une meilleure communication en milieu perturbé.

Les avantages découlant d'un adressage d'une bande fréquentielle unique, c'est-à-dire de la bande étendue qui comprend plusieurs bandes fréquentielles disjointes, résident dans la simplification de la gestion des perturbations. Ainsi, il est possible de s'affranchir d'éventuelles perturbations temporelles (mise en route d'un équipement, par exemple) ou fréquentielles (présence de perturbations électromagnétiques à certaines fréquences uniquement).

Le procédé selon l'invention peut également comporter les caractéristiques suivantes, considérées seules ou en combinaison :
- Les au moins deux bandes fréquentielles disjointes sont choisies parmi le groupe : bande fréquentielle CENELEC A, bande fréquentielle CENELEC B, et bande fréquentielle FCC ou bande fréquentielle ARIB.
- L'opération d'entrelacement des données précitée comprend :
   i) obtenir une première table d'entrelacement T *[m, n]* d'éléments binaires représentatifs des données à transmettre, la première table comprenant autant de secondes tables d'entrelacement Ti [*mᵢ, nᵢ*] d'éléments binaires que de bandes fréquentielles disjointes comprises dans la bande étendue, chaque seconde table d'entrelacement Ti [*mᵢ, nᵢ*] étant attribuée à une seule des au moins deux bandes fréquentielles disjointes de la bande fréquentielle étendue, les dimensions *mᵢ, ni* de chacune des secondes tables d'entrelacement Ti [*mᵢ, nᵢ*] étant définies selon un type de modulation utilisé pour l'émission des données dans la bande fréquentielle disjointe à laquelle une seconde table d'entrelacement est attribuée, des éventuelles différences de dimensions entre des secondes tables d'entrelacement étant susceptibles de générer une ou plusieurs positions dites invalides comprises dans la première table d'entrelacement mais non comprises dans l'une au moins des secondes tables d'entrelacement,
   ii) entrelacer les éléments binaires par décalages successifs des lignes m et des colonnes *n* de la première table T [*m, n*] d'entrelacement, les décalages successifs étant réalisés sous forme de permutations circulaires des éléments binaires respectivement par ligne et par colonne,
   iii) déplacer tout élément binaire détecté comme présent à une position invalide de la première table d'entrelacement vers une position d'une dite seconde table d'entrelacement qui est disponible après l'entrelacement des éléments binaires de la première table d'entrelacement, de sorte que chaque seconde table d'entrelacement comprenne des éléments binaires affectés à l'un desdits groupes de données,
   iv) orienter les éléments binaires de chacun des groupes de données vers une circuiterie électronique configurée pour moduler et transmettre lesdits éléments binaires.
- L'étape ii) pour entrelacer les éléments binaires, et les dimensions des secondes tables d'entrelacement, sont conformes à la recommandation ITU-T G.9903.
- Le réseau de communication par courants porteurs en ligne est un réseau maillé de type G3-PLC.

Un autre objet de l'invention est de proposer un dispositif noeud destiné à être utilisé dans un réseau de communication par courants porteurs en ligne, le dispositif noeud étant configuré pour communiquer dans une pluralité de bandes fréquentielles disjointes avec un second dispositif noeud du réseau et pour appliquer un mode de transmission dans une bande fréquentielle dite « bande fréquentielle étendue », la bande fréquentielle étendue comprenant au moins deux bandes fréquentielles parmi la pluralité de bandes fréquentielles disjointes, chaque bande fréquentielle disjointe comprenant une pluralité de sous-porteuses,
le dispositif noeud comprenant une circuiterie électronique configurée pour :
- répartir en plusieurs groupes de données, via une opération d'entrelacement, des données à transmettre dans la bande fréquentielle étendue, chaque groupe étant attribué à une seule desdites au moins deux bandes fréquentielles disjointes, et des données de chacun des groupes étant attribuées à chacune des sous porteuses de la bande fréquentielle à laquelle le groupe est attribué,
- transmettre les données de chacun des plusieurs groupes de données dans la bande fréquentielle disjointe auquel le groupe est attribué de sorte que la transmission des données soit opérée conjointement sur l'ensemble des sous-porteuses des au moins deux bandes fréquentielles.

Avantageusement, les au moins deux bandes fréquentielles disjointes dans lesquelles le dispositif noeud peut communiquer sont choisies parmi le groupe : bande fréquentielle CENELEC A, bande fréquentielle CENELEC B, et bande fréquentielle FCC ou bande fréquentielle ARIB et dans lequel les dimensions des secondes tables d'entrelacement sont conformes à la recommandation ITU-T G.9903.

L'invention a également pour objet un réseau de communication par courants porteurs en ligne comprenant une pluralité de dispositifs noeuds tels que précédemment décrits.

L'invention concerne également un produit programme d'ordinateur comprenant des instructions de codes de programme pour exécuter des étapes du procédé précédemment décrit lorsque le programme est exécuté par un processeur, ainsi qu'un support de stockage d'informations comprenant un produit programme d'ordinateur selon la revendication précédente.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau d'alimentation électrique utilisant des communications par courants porteurs en ligne ;
[Fig. 2] est un ordinogramme illustrant un procédé de transmission dans le réseau représenté sur la Fig. 1, selon un mode de réalisation ;
[Fig. 3] illustre la génération d'une première table d'entrelacement de données utilisée par le procédé de transmission illustré sur la Fig.2, à partir de secondes tables d'entrelacement, selon un mode de réalisation ;
[Fig. 4] illustre les positions de la première table d'entrelacement de la Fig.3 avec des références propres, selon un mode de réalisation ;
[Fig. 5] illustre une opération d'entrelacement dans la première table d'entrelacement déjà représentée sur les Fig.3 et Fig.4, selon un mode de réalisation ;
[Fig. 6] illustre un traitement (déplacement) d'éléments binaires entrelacés dans la première table déjà représentée sur les Fig.3, Fig.4 et Fig.5, selon un mode de réalisation ;
[Fig. 7] illustre une décomposition de la première table déjà représentée, en secondes tables d' entrelacement pour la création de groupes de données, selon un mode de réalisation ;
[Fig. 8] est une représentation schématique de l'architecture d'un dispositif noeud configuré pour exécuter le procédé de transmission de données représenté sur la Fig. 2.

### EXPOSE DETAILLE DE MODES DE REALISATION

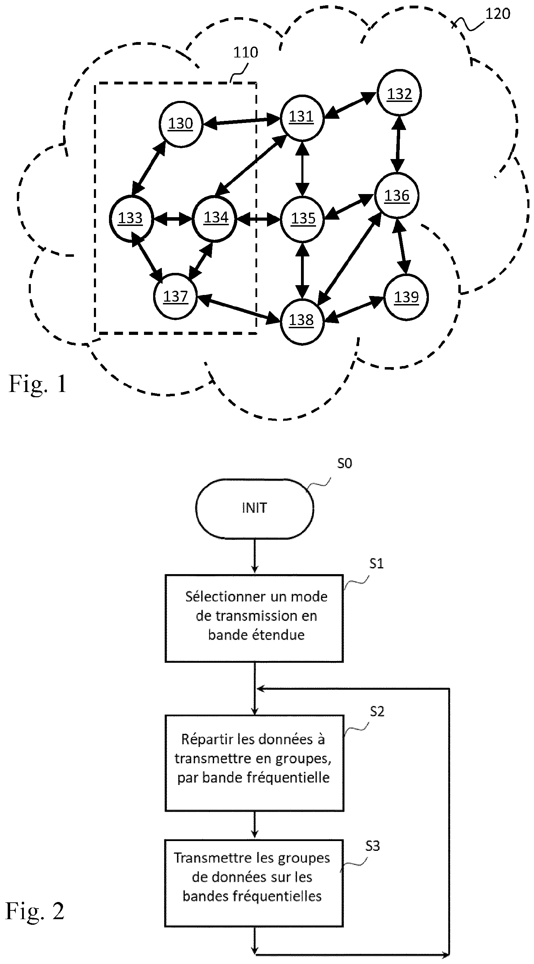

La **Fig. 1** illustre schématiquement un réseau de communication 120. Le réseau de communication 120 s'appuie sur des communications par courants porteurs en ligne PLC. Le réseau de communication 120 est par exemple un réseau d'alimentation électrique de type AMM permettant à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication 120. Le réseau de communication 120 peut comporter d'autres dispositifs noeuds, par exemple installés au niveau de transformateurs électriques.

Le réseau de communication 120 a une structure maillée. La structure maillée du réseau de communication 120 est représentée schématiquement sur la Fig. 1 grâce à des flèches représentant les liens de communication entre deux noeuds voisins et où des dispositifs noeuds jouent le rôle de relais pour augmenter la portée des communications dans le réseau de communication 120. Un même compteur électrique intelligent dispose ainsi potentiellement de plusieurs routes pour atteindre le concentrateur de données, et vice versa.

La présente invention est donc particulièrement adaptée au contexte de la technologie G3-PLC.

Le réseau de communication 120 comporte ainsi une pluralité de dispositifs noeuds 130, 131, 132, 133, 134, 135, 136, 137, 138, 139. A chacun des dispositifs noeuds du réseau de communication 120 est associé un voisinage réseau. Par exemple, le dispositif noeud 133 de la Fig. 1 est associé à un voisinage réseau 110 englobant les dispositifs noeuds 130, 134 et 137. Dans le réseau de communication 120, un signal ou un message diffusé par un dispositif noeud, tel que, par exemple, le dispositif noeud 133, n'est généralement pas visible en tout point du réseau de communication 120. Chaque dispositif noeud émetteur de signaux ou de messages dispose alors d'un voisinage réseau, c'est-à-dire d'un sous-ensemble du réseau de communication 120 dans lequel tout dispositif noeud peut recevoir de manière intelligible les signaux ou messages directement en provenance du dispositif noeud ayant diffusé ces signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source des signaux et aussi potentiellement en fonction de caractéristiques du canal de communication telles que, par exemple, une atténuation, un niveau de bruit, une impédance.

Le réseau de communication 120 s'appuie, sur un protocole de routage de type réactif, tel que, par exemple, le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication 120.

Pour découvrir une route appropriée dans le réseau de communication 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite copie de la requête si ledit dispositif noeud en question n'est pas le dispositif noeud destination. Par diffusion de proche en proche, plusieurs copies de la requête de découverte de route sont typiquement reçues par le dispositif noeud destination, chacune de ces copies ayant suivi un chemin différent dans le réseau de communication 120.

L'utilisation de tables de routage mémorisées dans les dispositifs noeuds permet d'effectuer des communications point-à-point (« unicast » en anglais) entre toute paire de dispositifs noeuds du réseau de communication 120. Des dispositifs noeuds intermédiaires servent donc de relais lorsque les dispositifs noeuds de ladite paire ne sont pas dans le voisinage réseau l'un de l'autre, les communications s'opèrent ainsi de proche en proche, chaque dispositif noeud s'appuyant sur un de ses propres voisins pour faire suivre des messages jusqu'à leurs destinataires respectifs.

Pour communiquer entre dispositifs noeuds voisins (c'est-à-dire des dispositifs noeuds qui sont dans le voisinage réseau l'un de l'autre), les messages sont transmis sous forme de trames modulées. Lorsqu'une trame modulée est spécifiquement adressée à un dispositif noeud voisin et qu'elle est correctement démodulée par celui-ci, ledit dispositif noeud voisin retransmet un acquittement ACK au dispositif noeud qui lui a adressé ladite trame modulée. L'acquittement ACK est transmis sur la même bande fréquentielle que la trame modulée à laquelle ledit acquittement ACK est associé.

Plusieurs bandes fréquentielles sont définies pour supporter la transmission de ces trames modulées, un schéma de modulation adapté étant associé avec chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

En termes de bandes fréquentielles utilisables dans le cadre de la mise en oeuvre du réseau de communication 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; et un quatrième schéma de modulation à seize porteuses dans la bande fréquentielle CENELEC B. Il apparaît de ce qui précède, qu'un dispositif noeud peut utiliser simultanément plusieurs bandes fréquentielles disjointes pour communiquer avec un ou plusieurs de ses voisins, en appliquant un mécanisme de transmission adapté. Toutefois, il apparaît que les bandes fréquentielles ARIB et FCC ne peuvent pas être utilisées simultanément par un même dispositif noeud, étant donné qu'elles se recouvrent.

Avantageusement, au moins certaines des dispositifs noeuds 130, 131, 132, 133, 134, 135, 136, 137, 138, 139 sont configurés pour communiquer dans plusieurs bandes fréquentielles disjointes. Il est dès lors important, pour un dispositif noeud donné, de pouvoir déterminer quels sont les modes de communication supportés par un dispositif noeud dans son voisinage réseau. Les termes « modes de communications supportés » désignent un ou plusieurs modes de communication natifs d'un dispositif noeud, c'est-à-dire que ce dernier est capable d'implémenter du fait de ses configurations possibles, et impliquent aussi que ce ou ces modes de communication natifs soient utilisables à un instant donné, compte tenu des éventuelles perturbations qui peuvent exister. Les perturbations peuvent être issues, par exemple, d'un environnement bruité.

Un échange de messages selon un protocole prédéfini permet, par exemple, à un premier dispositif noeud d'obtenir des informations quant aux capacités de communication d'un second dispositif noeud voisin. Par exemple, le premier dispositif noeud adresse au second dispositif noeud voisin un exemplaire d'un premier message dans chacune des bandes fréquentielles dans lesquelles il peut communiquer du fait de sa configuration, et le dispositif noeud voisin est configuré pour reconnaître un tel message et y répondre par un second message dans chacune des bandes fréquentielles dans laquelle il a pu le recevoir.

Dans un contexte G3-PLC, par exemple, les exemplaires du premier message contiennent une information selon laquelle une estimation de canal est sollicitée auprès du dispositif noeud voisin, pour la bande fréquentielle dans laquelle il a reçu le message (requête dite « Tone Map »). Avantageusement, l'information selon laquelle une estimation canal est sollicitée auprès du second dispositif noeud voisin par le premier dispositif noeud est alors un indicateur *Tone Map Request* d'un entête de contrôle de trame défini selon la recommandation ITU-T G9903. Ainsi, le second dispositif noeud voisin répondra à la requête *Tone Map Request* en envoyant au premier dispositif noeud, dans chacune des bandes fréquentielles dans laquelle il a reçu un exemplaire du premier message, un second message comprenant des informations représentatives d'au moins une estimation de canal sous la forme d'un bloc de données *Tone Map Response* tel que défini selon la recommandation ITU-T G9903.

Le premier dispositif pourra donc connaître et mémoriser des informations quant aux bandes fréquentielles qu'il peut utiliser pour communiquer avec le second dispositif noeud voisin.

Selon un mode de réalisation de l'invention, au moins une partie des dispositifs noeuds 130, 131, 132, 133, 134, 135, 136, 137, 138, 139 supportant des modes de communication dans plusieurs bandes fréquentielles disjointes supporte en outre un mode de communication en bande fréquentielle dite « bande fréquentielle étendue ». Une bande fréquentielle étendue comprend avantageusement plusieurs bandes fréquentielles disjointes. Ainsi une bande fréquentielle étendue peut comprendre deux, trois ou quatre bandes fréquentielles disjointes, par exemple, ou plus encore. Chaque bande fréquentielle disjointe utilise une pluralité de sous porteuses.

La détermination de la capacité d'un dispositif noeud voisin à communiquer dans une bande fréquentielle étendue est similaire à ce qui est précédemment décrit pour la détermination des différents modes de communication supportés par un dispositif, dès lors que la bande fréquentielle étendue est communément définie entre les différents dispositifs noeuds voisins du réseau de communication. Ainsi, selon un mode de réalisation, la bande fréquentielle étendue peut être définie comme comprenant la bande fréquentielle CENELEC A, la bande fréquentielle CENELEC B et la bande FCC. Selon une variante, la bande fréquentielle étendue peut être définie comme comprenant la bande fréquentielle CENELEC A, la bande fréquentielle CENELEC B et la bande fréquentielle ARIB. Un premier dispositif noeud peut donc émettre une requête en estimation de canal (requête dite « TONE MAP ») dans la bande fréquentielle étendue pour déterminer si un second dispositif noeud voisin supporte des communications dans la bande fréquentielle étendue

La **Fig. 2** illustre un procédé de transmission dans une bande fréquentielle étendue selon un mode de réalisation. Le procédé illustré est exécuté dans l'un, premier, des dispositifs noeuds du réseau de communication 120, configuré de sorte à supporter un mode de transmission en bande fréquentielle étendue, et qui communique avec un second dispositif noeud voisin, lui aussi configuré pour communiquer en bande fréquentielle étendue. Le premier dispositif noeud dans lequel est exécuté le procédé est, par exemple, le dispositif noeud 133 qui communique avec le second dispositif noeud, voisin, 134.

Au terme d'une étape d'initialisation **S0,** les premier et second dispositifs noeuds 133 et 134 sont configurés pour communiquer l'un avec l'autre selon au moins un mode de communication dans au moins une bande fréquentielle. Il est considéré que les dispositifs sont alors normalement opérationnels, à ce stade, et qu'un échange de messages peut être initié.

Selon un mode de réalisation, le premier dispositif noeud 133 est configuré lors d'une étape **S1** pour opérer des communications dans une bande fréquentielle étendue. Cette configuration est par exemple réalisée par une écriture, par un module de contrôle du premier dispositif noeud 133, d'un indicateur de validation de bande fréquentielle étendue. Selon un mode de réalisation, cet indicateur est un élément binaire (bit) positionné à « 1 » dans un registre de configuration du dispositif noeud 133 qui contrôle un entrelacement de données à émettre selon un mode d'entrelacement propre à une transmission en bande fréquentielle étendue.

La configuration du premier dispositif noeud 133 dans un mode de communication en bande fréquentielle étendue peut être réalisée, par exemple, après que le premier dispositif noeud 133 ait adressé une requête en estimation de canal, laquelle requête comprend un indicateur selon lequel une bande fréquentielle étendue est concernée par cette requête, et que le second dispositif noeud voisin 134 ait alors répondu à cette requête en indiquant au premier dispositif noeud 133 qu'il est bien comptable avec une communication en bande fréquentielle étendue. La réponse du second dispositif noeud voisin 134 est, par exemple, réalisée sous la forme d'un message contenant des informations représentatives d'une estimation de canal, sur chacune des bandes fréquentielles comprises dans la bande fréquentielle étendue telle que définie par le premier dispositif noeud 133.

Selon une variante, le premier dispositif noeud 133 est nativement conçu pour opérer des communications en bande fréquentielle étendue, telle que la bande fréquentielle est définie dans la présente description et aucune configuration particulière du premier dispositif noeud 133 n'est requise après une phase d'initialisation suite à une mise sous tension.

Ainsi, il est considéré que le dispositif noeud 133 est configuré pour communiquer en bande fréquentielle étendue au terme de l'étape d'initialisation S0 et applique un mode de communication en bade fréquentielle étendue, que cela ait requis une configuration particulière (sélection d'un mode de communication, par exemple) ou encore que cette configuration soit native, c'est-à-dire inhérente à la conception du premier dispositif noeud 133 et aux différents circuits électroniques qui le composent.

Bien évidemment le premier dispositif noeud 133 est configuré pour opérer tout échange de messages ou de signaux protocolaires destiné à organiser et gérer le partage du réseau avec d'autres dispositifs noeuds. De tels échanges ont ainsi vocation à solliciter un accès au réseau, ou encore à enregistrer des informations relatives aux capacités de communications des dispositifs noeuds voisins, tels que le second dispositif noeud 134, par exemple.

Une répartition des données à transmettre en bande fréquentielle étendue, dans chacune des bandes fréquentielles disjointes de la bande étendue définie, est opérée lors d'une étape **S2.** Lors de cette étape S2, les données sont réparties en différents groupes de données. Les données de chacun des différents groupes sont destinées à être émises dans une bande fréquentielle unique attribuée au groupe. Il est considéré ici, indifféremment, qu'un groupe de données est attribué à une seule des bandes fréquentielles comprises dans la bande fréquentielle étendue, ou vice-versa. Selon un mode de réalisation, les groupes de données réparties sont des ensembles d'éléments binaires b1, b2, b3, b4, ..., bi,...bn en provenance d'un flux sériel d'éléments binaires. Par exemple, les données ainsi présentées sous la forme d'un flux sériel proviennent d'un encodeur convolutionnel, tel qu'un encodeur Viterbi.

Avantageusement, la répartition des données à transmettre dans une bande fréquentielle étendue, en plusieurs groupes, est réalisée lors d'une étape d'entrelacement des données. L'étape d'entrelacement des données est réalisée par une circuiterie dite « entrelaceur ». Selon un mode de réalisation, l'entrelacement est avantageusement opéré à partir d'une table d'entrelacement d'entrée comprenant une pluralité de tables d'entrelacement de sortie, comme cela est expliqué plus loin dans la présente description.

Après l'entrelacement décrit et réalisé dans le premier dispositif noeud 133, les données regroupées (réparties) dans autant de tables d'entrelacement de sortie de l'entrelaceur que de bandes fréquentielles disjointes comprises dans la bande fréquentielle étendue, sont adressées à des modulateurs du premier dispositif noeud 133 opérant chacun dans l'une des différentes bandes fréquentielles disjointes. Ainsi les données sont transmises au second dispositif noeud voisin 134, parallèlement et simultanément, par les différents modulateurs du premier dispositif noeud 133.

Le second dispositif noeud 134, configuré pour la réception des données en bande étendue, c'est-à-dire simultanément dans les mêmes bandes fréquentielles disjointes que celles utilisées pour la transmission, opère de façon inverse. En d'autres termes, le second dispositif noeud 134 démodule les données reçues dans chacune des bandes fréquentielles disjointes, désentrelace les données de façon inverse à ce qui est réalisé par l' entrelaceur du premier dispositif noeud 133, puis délivre un flux sériel d'éléments binaires à destination d'un décodeur Viterbi, le cas échéant, du second dispositif noeud 134.

L'ordinogramme de la Fig.2 rebouclant en début d'étape S2, illustre une continuité de traitement entre des opérations successives d'entrelacement de données à l'étape S2 et la transmission de ces mêmes données réparties en groupes, en bande fréquentielle étendue à l'étape S3, c'est-à-dire parallèlement sur plusieurs bandes fréquentielles disjointes et en utilisant conjointement toutes les sous-porteuses de chacune des bandes fréquentielles disjointes de la bande étendue. Ainsi, le flux d'éléments binaires en entrée de l'entrelaceur est traité par tronçons successifs d'éléments binaires. Pendant que des éléments binaires sont entrelacés, des éléments précédemment entrelacés sont transmis par les modulateurs.

Selon un mode de réalisation, en cas de problème de transmission, le premier dispositif noeud 133 peut être reconfiguré dans un mode de communication distinct d'un mode de communication en bande étendue, ou encore peut transmettre via un dispositif noeud voisin autre que le second dispositif noeud voisin 134. Les différentes étapes de détermination de la qualité de la transmission et/ou de reconfiguration du premier dispositif noeud 133 ne sont pas représentées sur la Fig. 2, n'étant pas utiles à la compréhension de l'invention.

Comme indiqué, la répartition des données à transmettre en bande fréquentielle étendue est astucieusement réalisée lors d'une opération d'entrelacement, de sorte, notamment, à simplifier l'adaptation de dispositifs noeuds existants pour supporter une transmission en bande fréquentielle étendue.

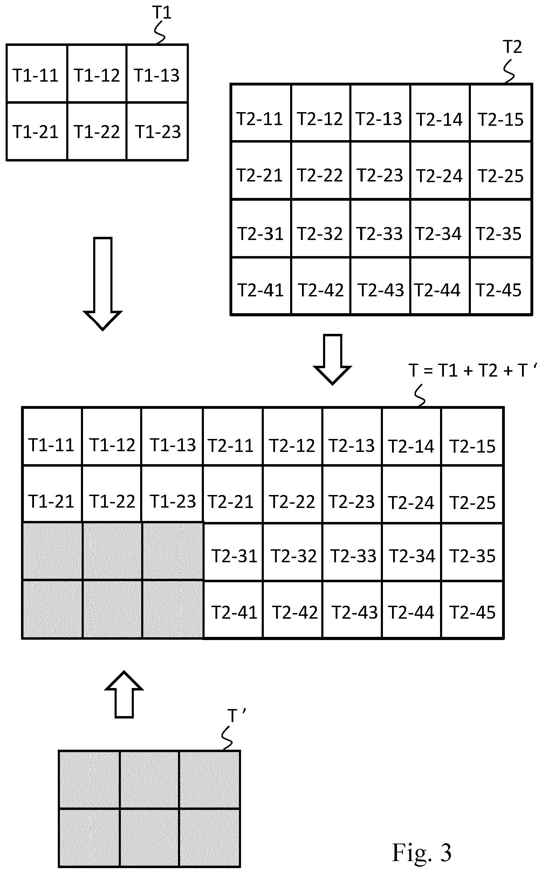

La **Fig. 3** illustre une première table T d'entrelacement, obtenue à partir de la concaténation de secondes tables d'entrelacement T1 et T2. La première table d'entrelacement T est la table d'entrée de l'entrelaceur utilisée par le procédé de transmission décrit sur la Fig.2 et les tables d'entrelacement T1 et T2 sont des tables de sortie de l'entrelaceur utilisées pour la transmission des groupes de données réparties vers les différents modulateurs, par le procédé exécuté. Dans l'exemple décrit, deux modulateurs sont utilisés pour la transmission des données dans deux bandes fréquentielles disjointes de la bande fréquentielle étendue telle que définie.

Astucieusement, les tables d'entrelacement T1 et T2 présentent des dimensions respectives (nombre de lignes *mᵢ* et de colonnes *nᵢ*) définies à partir des types de modulation utilisés dans chacune des bandes fréquentielles disjointes de la bande fréquentielle étendue. Selon un mode de réalisation, un premier modulateur utilise une modulation BPSK (sigle de « Binary Phase Shift Keying », en anglais) pour la première bande fréquentielle et un second modulateur utilise une modulation de type QPSK (sigle de « Quadrature Phase Shift Keying », en anglais). Ainsi la table d'entrelacement T1 correspond à une table d'entrelacement telle que définie, par exemple, selon la norme G3-PLC pour une modulation BPSK et ses dimensions sont définies par 2 lignes et 3 colonnes. De façon similaire, la table d'entrelacement T2 correspond à une table d'entrelacement telle que définie, par exemple, selon la norme G3-PLC pour une modulation QPSK et ses dimensions sont définies par 4 lignes et 5 colonnes. Selon la norme G3-PLC, les dimensions d'une table d'entrelacement sont définies de sorte que le nombre de colonnes est égal au nombre de sous-porteuses utilisées dans la bande fréquentielle utilisée pour la transmission des données et le nombre de lignes dépend du nombre d'éléments binaires à entrelacer. Ce nombre d'éléments binaires à entrelacer est donc déterminé selon le nombre d'éléments binaires codés par un symbole selon le type de modulation utilisée, et par le nombre de sous-porteuses utilisées pour la transmission des symboles.

Astucieusement, selon l'exemple de définition de la première table d'entrelacement T, la première table d'entrelacement T est obtenue par une concaténation des secondes tables d'entrelacement T1 et T2 qui seraient utilisées pour l'entrelacement des données en vue de la transmission dans une bande fréquentielle disjointe unique, respectivement en BPSK pour la seconde table d'entrelacement T1 et en QPSK pour la seconde table d'entrelacement T2. Des indices T1-11 à T1-13 symbolisent les différentes positions de la première ligne de la seconde table d'entrelacement T1, et des indices T1-21 à T1-23 symbolisent les différentes positions de la deuxième ligne de la seconde table d'entrelacement T1. De la même façon, des indices T2-11 à T2-15 symbolisent les différentes positions de la première ligne de la seconde table d'entrelacement T2, des indices T2-21 à T2-25 symbolisent les différentes positions de la deuxième ligne de la seconde table d'entrelacement T2, des indices T2-31 à T2-35 symbolisent les différentes positions de la troisième ligne de la seconde table d'entrelacement T2 et des indices T2-41 à T2-45 symbolisent les différentes positions de la quatrième ligne de la seconde table d'entrelacement T2. Ainsi, plus généralement, un indice Ti [*mᵢ,nᵢ*] symbolise dans la présente description une position à la *m* ^{ième} ligne et la *n* ^{ième} colonne d'une table Ti. Les indices précédemment cités sont apposés dans les différentes positions de la table d'entrelacement T obtenue par concaténation des tables d'entrelacement T1 et T2, sur la Fig 3. pour mieux illustrer le mode de concaténation utilisé. Selon un mode de réalisation, la concaténation des secondes tables d'entrelacement T1 et T2 est opérée de sorte que la table dont les colonnes correspondent à des bandes sous-porteuses de fréquences les plus basses est située à gauche. Les secondes tables d'entrelacement T1 et T2 sont concaténées pour définir la première table T en faisant concorder la première ligne de la seconde table d'entrelacement T1 avec la première ligne de la seconde table d'entrelacement T2, puis la deuxième ligne de la seconde table d'entrelacement T1 avec la deuxième ligne de la seconde table d'entrelacement T2. Ainsi la définition de la première table d'entrelacement T correspond à l'addition de la seconde table d'entrelacement T1 et de la seconde table d'entrelacement T2 auxquelles s'ajoutent une troisième table entrelacement T' de sorte que la première table d'entrelacement T présente un même nombre de positions dans chacune de ses colonnes et dans chacune de ses lignes. Afin de simplifier les opérations d'entrelacement selon le mode de réalisation décrit, les positions comprises dans la table T', comprises dans la première table d'entrelacement T mais non comprises dans l'une au moins des secondes tables d'entrelacement T1 et T2, sont dites « invalides » puisque, après un entrelacement opéré dans la première table d'entrelacement T, des données (éléments binaires) pourraient être déplacées dans l'une de ces positions.

En effet, une opération d'entrelacement dans une table d'entrelacement consiste usuellement à décaler un certain nombre de fois le contenu de chacune des lignes et des colonnes par permutations circulaires des éléments binaires contenus dans les positions de la table. Chaque ligne étant classiquement décalée un nombre de fois différent des autres lignes et chaque colonne étant classiquement décalée un nombre de fois différent que les autres colonnes.

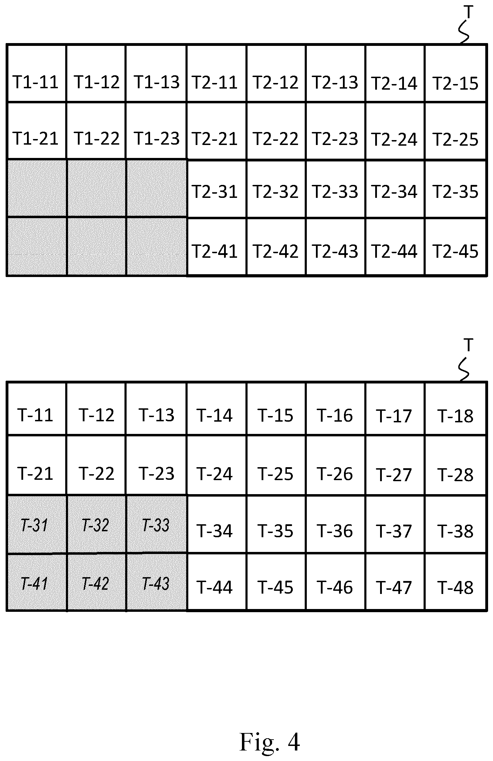

La **Fig. 4** illustre la correspondance des indices propres à une identification des positions dans la première table d'entrelacement T avec les indices propres à une identification des positions dans chacune des secondes tables d'entrelacement T1 et T2, ou des positions invalides de la table T'. Ainsi, par exemple, la position T1-11 de la seconde table d'entrelacement T1 correspond à la position T-11 de la première table d'entrelacement T, et la position T2-32 de la seconde table d'entrelacement T2 correspond à la position T-35 de la première table d'entrelacement T, ce qui permet de bien comprendre comment sont respectivement identifiées les positions selon qu'elles se réfèrent à la première table d'entrelacement T, obtenue par concaténation, ou à l'une des secondes tables d'entrelacement T1 et T2 définies en fonction d'un type de modulation utilisé dans une bande fréquentielle disjointe.

Les positions T-31, T-32, T-33, T-41, T-42 et T-43 sont les positions invalides de la première table d'entrelacement T.

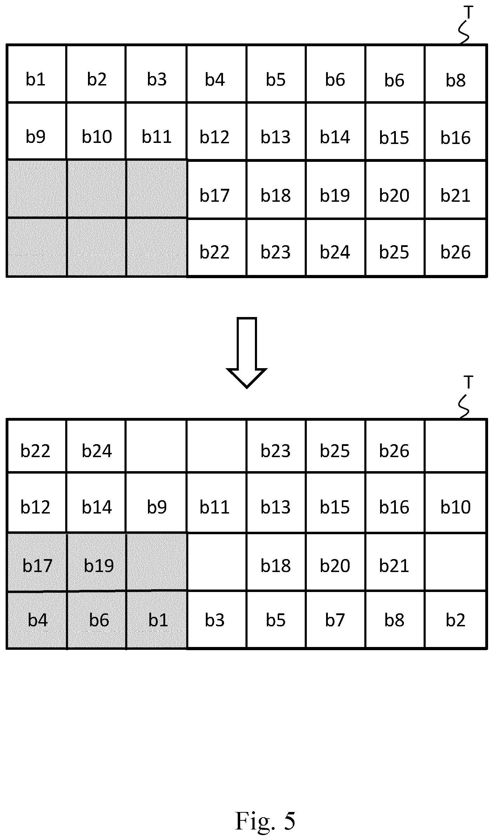

La **Fig. 5** illustre l'opération d'entrelacement réalisée dans la première table d'entrelacement T par le procédé de transmission selon l'invention. La partie supérieure de la figure représente la première table d'entrelacement T définie préalablement à l'entrelacement de sorte que chacune des positions de la table d'entrelacement T qui n'est pas invalide comprend un élément binaire en provenance du flux d'éléments binaires à entrelacer (fourni, par exemple en sortie d'un encodeur convolutionnel). Les éléments binaires b1 à b26 du flux d'éléments binaires sont « chargés » de gauche à droite et de haut en bas dans la première table d'entrelacement T de sorte que les positions invalides soient ignorées. L'élément binaire b1 est chargé dans la position T-11, b2 est chargé dans la position T-12, ... b13 dans la position T-25, ... et b26 dans la position T-48. Les positions invalides T-31, T-32, T-33, T-41, T-42 et T-43 de la première table d'entrelacement T sont ignorées pour le chargement des éléments binaires b1 à b26. On obtient ainsi la première table d'entrelacement T comprenant les secondes tables d'entrelacement T1 et T2, prête pour une opération d'entrelacement visant à répartir les données chargées (éléments binaires) en plusieurs groupes de données attribués chacun à une bande fréquentielle disjointe. L'opération d'entrelacement en elle-même n'est pas décrite sur la Fig. 5 mais est symbolisée par une flèche menant de la représentation de l'état de la première table d'entrelacement T préalablement à l'entrelacement, vers la représentation de l'état de la première table d'entrelacement T suite à l'entrelacement. Ainsi la partie inférieure de la Fig. 5 représente la première la table d'entrelacement T après l'opération globale d'entrelacement. L'élément binaire b22 occupe la position occupée par l'élément binaire b1 avant l'entrelacement, l'élément binaire b24 occupe la position occupée par l'élément binaire b2 avant l'entrelacement, l'élément binaire b23 occupe la position occupée par l'élément b5 avant l'entrelacement, ..., et ainsi de suite. L'entrelacement ayant été réalisé dans des lignes et des colonnes entières de la première table d'entrelacement T, il en résulte que des positions invalides peuvent comprendre des éléments binaires suite à l'entrelacement. Selon le mode de réalisation, ces éléments sont alors déplacés vers des positions valides de la première table d'entrelacement T.

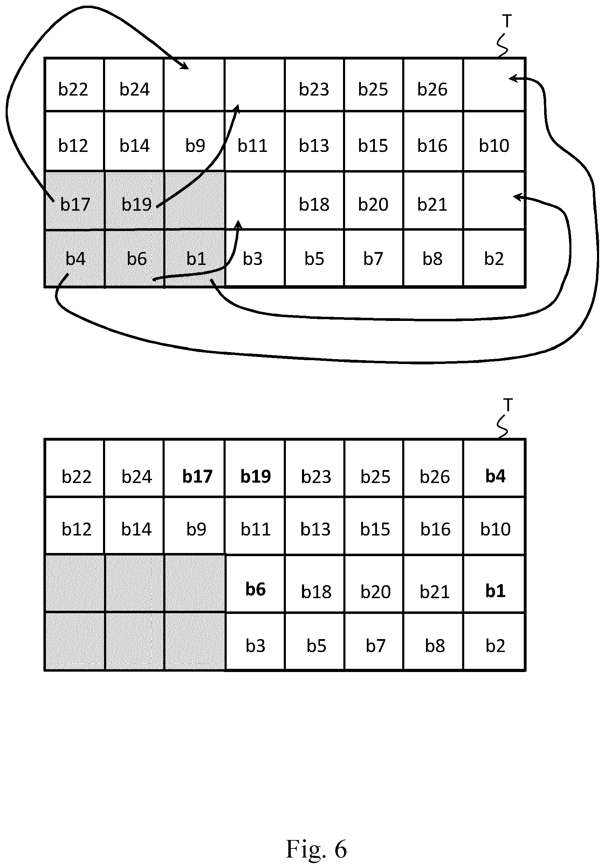

La **Fig. 6** illustre des déplacements d'éléments binaires de positions invalides de la première table d'entrelacement T vers des positions valides, c'est-à-dire des positions comprises dans l'une des secondes tables d'entrelacement T1 et T2. Ces déplacements d'éléments binaires sont symbolisés par des flèches.

Selon un mode de réalisation, ces déplacement sont réalisés en parcourant les positions invalides de la table T' de haut en bas et de gauche à droite. Dès qu'une position invalide comprend un élément binaire bi, celui-ci est déplacé vers la première position valide disponible rencontrée en parcourant la première table d'entrelacement T de haut en bas et de gauche à droite. La partie supérieure de la Fig. 6 illustre les déplacements des éléments binaires ainsi opérés, et la partie inférieure de la Fig. 6 illustre les positions respectives des éléments binaires au terme de ce traitement (déplacements).

Astucieusement, chacune des secondes tables d'entrelacement T1 et T2 comprend un groupe d'éléments binaires des données réparties en groupes correspondant chacun à une bande fréquentielle disjointe comprise dans la bande fréquentielle étendue. En d'autres termes et selon l'exemple décrit, les éléments binaires compris dans la seconde table d'entrelacement T1 sont transmis au premier modulateur en vue d'une transmission en BPSK dans une première bande fréquentielle disjointe de la bande étendue, et les éléments binaires compris dans la seconde table d'entrelacement T2 sont transmis au second modulateur en vue d'une transmission en QPSK dans une deuxième bande fréquentielle disjointe de la bande étendue. Chacune des colonnes des secondes tables d'entrelacement correspond à une sous porteuse de la bande fréquentielle attribuée au groupe de données. Ainsi, l'entrelacement opère également une répartition des données de chaque groupe sur les différentes sous porteuses de la bande fréquentielle utilisée pour la transmission des données du groupe.

Selon un mode de réalisation, les éléments binaires sont respectivement transmis par le biais de flux sériels vers les modulateurs, via des zones mémoires tampons (encore appelées buffers ou registres). Selon une variante, les éléments binaires sont transmis de fait vers des buffers d'entrée respectivement associés aux modulateurs, les buffers d'entrée des modulateurs étant directement les secondes tables d'entrelacement T1 et T2.

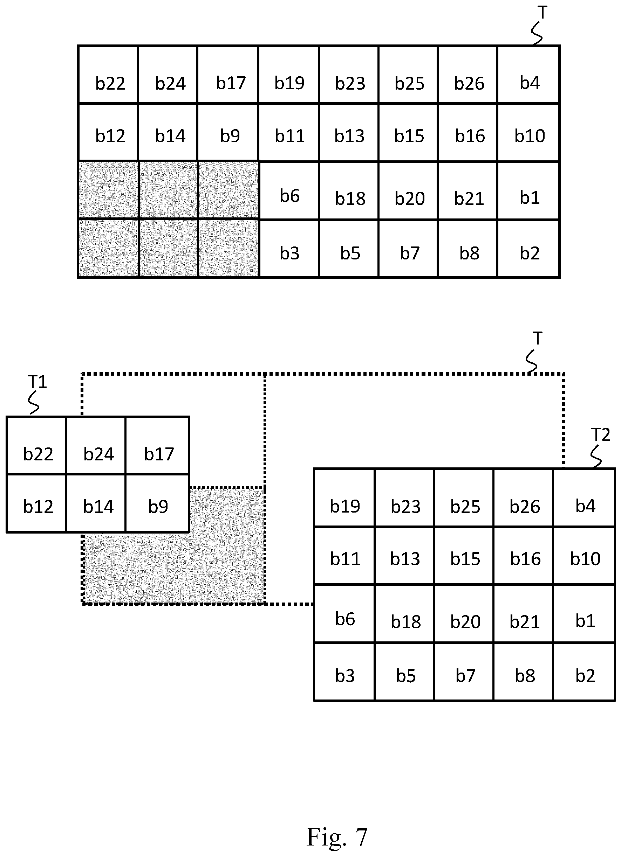

La **Fig.7** illustre la répartition en groupe de la première table d'entrelacement T en deux secondes tables d'entrelacement T1 et T2 après les opérations d'entrelacement et de traitement (déplacement) des éléments binaires présents à des positions invalides, le cas échéant. Cette décomposition correspond avantageusement à la fin de l'entrelacement utile à la répartition des données à transmettre dans la bande fréquentielle étendue, dans les deux bandes fréquentielles disjointes utilisées selon l'exemple décrit.

La décomposition illustrée de la première table d'entrelacement T en deux secondes tables d'entrelacement T1 et T2, au terme de l'entrelacement, constitue une orientation des données sous forme d'éléments binaires de chacun des groupes de données (donc de chacune des secondes tables d'entrelacement T1 et T2 vers une circuiterie électronique configurée pour moduler et transmettre les éléments binaires. La circuiterie électronique dédiée à chacune des bandes fréquentielles disjointes comprend notamment le modulateur opérant pour une transmission dans cette bande fréquentielle disjointe.

Si le mode de réalisation décrit ci-avant illustre une transmission en bande fréquentielle étendue comprenant deux bandes fréquentielles disjointes, le raisonnement est similaire pour ce qui concerne une répartition de données à transmettre dans trois, quatre ou plus encore de bandes fréquentielles disjointes. Ainsi la première table d'entrelacement T (la plus grande) comprend autant de secondes tables d'entrelacement T1, T2, Ti que de bandes fréquentielles disjointes comprises dans la bande fréquentielle étendue. Selon un mode de réalisation préféré, les secondes tables d'entrelacement T1, T2, Ti, dont les dimensions respectives sont définies selon le type de modulation utilisé sur chacune des bandes fréquentielles disjointes comprises dans la bande fréquentielle étendue, sont concaténées de sorte que la table qui comprend les sous porteuses les plus basses soit positionnée à gauche dans la première table d'entrelacement T, et la table qui comprend les sous porteuses les plus hautes soit positionnée à droite dans la première table d'entrelacement. Les éventuelles secondes tables d'entrelacement intermédiaires sont disposées de gauche à droite, par ordre de fréquence croissante des sous porteuses qu'elles comprennent. En outre, les premières lignes de chacune des secondes tables T1, T2, Ti sont alignées en première ligne supérieure de la première table d'entrelacement T.

Bien évidemment, la représentation matricielle des tables d'entrelacement T, T1, T2 et de la table T' a vocation à simplifier la compréhension de l'agencement des données pour les opérations d'entrelacement décrites, et chacune des tables pourrait être représentée sous forme d'un vecteur d'éléments binaires, par exemple horizontal ou vertical comprenant des segments délimitant les lignes et les colonnes précédemment décrites. La représentation des positions des éléments binaires traités peut être quelconque, pour peu que les opérations réalisées sur les éléments binaires correspondent aux principes d'entrelacement précédemment décrits. En effet, les positions des éléments binaires dans les tables correspondent classiquement à des cellules de registres, ou de mémoire vive d'une circuiterie électronique d'entrelacement.

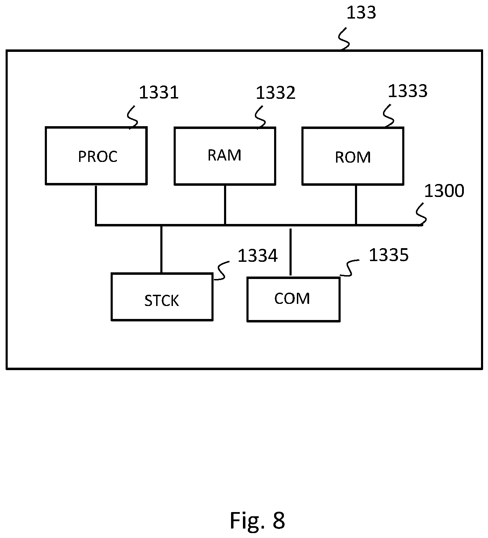

La **Fig. 8** illustre schématiquement un exemple d'architecture interne de tout dispositif noeud du réseau de communication 120. Considérons à titre illustratif que la Fig. 8 illustre un agencement interne du premier dispositif noeud 133. Un tel dispositif noeud est qualifié de multi-bande car capable de transmettre un message sur plusieurs bandes fréquentielles. On note que la Fig. 8 pourrait aussi illustrer schématiquement un exemple d'architecture matérielle d'un module de traitement compris dans le premier dispositif noeud 133, tel qu'une circuiterie d'entrelacement (encore appelée entrelaceur).

Selon l'exemple d'architecture matérielle représenté à la Fig. 8, le premier dispositif noeud 133 comprend alors, reliés par un bus de communication 1300 : un processeur ou CPU (« Central Processing Unit » en anglais) 1331 ; une mémoire vive RAM (« Random Access Memory » en anglais) 1332 ; une mémoire morte ROM (« Read Only Memory » en anglais) 1333 ; une unité de stockage telle qu'un disque dur (ou un lecteur de support de stockage, tel qu'un lecteur de cartes SD (« Secure Digital » en anglais) 1334 ; au moins une interface de communication 1335 permettant au premier dispositif noeud 133 de communiquer avec les dispositifs noeuds appartenant à son voisinage réseau, tels que par exemple, les dispositifs noeuds 134 et 137.

Le processeur 1301 est capable d'exécuter des instructions chargées dans la RAM 1332 à partir de la ROM 1333, d'une mémoire externe (non représentée), d'un support de stockage (tel qu'une carte SD), ou d'un réseau de communication. Lorsque le premier dispositif noeud 133 est mis sous tension, le processeur 1331 est capable de lire de la RAM 1332 des instructions et de les exécuter. Ces instructions forment un programme d'ordinateur causant la mise en oeuvre, par le processeur 1331, de tout ou partie du procédé décrit en relation avec les Figs. 2 à 7.

Tout ou partie du procédé décrit en relation avec les Figs. 2 à 7 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le premier dispositif noeud 133 comprend de la circuiterie électronique configurée pour mettre en oeuvre les procédés décrits en relation avec le premier dispositif noeud 133 (de même pour le second dispositif noeud 134). Bien évidemment le premier dispositif noeud 133 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

Le procédé est particulièrement avantageux dans le contexte d'un réseau maillé de type G3-PLC pour augmenter les performances de communication entre des dispositifs noeuds d'un tel réseau.

## Revendications

1. Procédé de transmission de données dans un réseau de communication (120) par courants porteurs en ligne, le procédé étant exécuté dans un premier dispositif noeud (133) dudit réseau (120) configuré pour communiquer dans une pluralité de bandes fréquentielles disjointes avec un second dispositif noeud (134) dudit réseau (120), **caractérisé en ce que** le premier dispositif noeud (133) applique un mode de transmission en faisant référence à une bande fréquentielle étendue, unique, (S 1) comprenant au moins deux bandes fréquentielles parmi ladite pluralité de bandes fréquentielles disjointes, chaque bande fréquentielle disjointe comprenant une pluralité de sous-porteuses,
et **en ce que** le procédé comprend des étapes de :
- répartir (S2) en plusieurs groupes de données, via une opération d'entrelacement, des données à transmettre dans ladite bande fréquentielle étendue unique, chaque groupe étant attribué à une seule desdites au moins deux bandes fréquentielles disjointes, et des données de chacun des groupes étant attribuées à chacune des sous porteuses de la bande fréquentielle à laquelle le groupe est attribué,
- transmettre (S3) les données de chacun des plusieurs groupes de données dans la bande fréquentielle disjointe auquel le groupe est attribué de sorte que la transmission des données soit opérée conjointement sur l'ensemble des sous-porteuses des au moins deux bandes fréquentielles.

2. Procédé selon la revendication précédente, dans lequel lesdites au moins deux bandes fréquentielles disjointes sont parmi le groupe : bande fréquentielle CENELEC A, bande fréquentielle CENELEC B, et bande fréquentielle FCC ou bande fréquentielle ARIB.

3. Procédé selon l'une des revendications 1 et 2 dans lequel l'opération d'entrelacement des données comprend :
- obtenir une première table d'entrelacement T [*m, n*] d'éléments binaires représentatifs des données à transmettre, la première table d'entrelacement comprenant autant de secondes tables d'entrelacement Ti [*mᵢ, nᵢ*] d'éléments binaires que de bandes fréquentielles disjointes comprises dans la bande étendue, chaque seconde table d'entrelacement Ti [*mᵢ, nᵢ*] étant attribuée à une seule des au moins deux bandes fréquentielles disjointes de la bande fréquentielle étendue, les dimensions *mᵢ, nᵢ* de chacune des secondes tables d'entrelacement Ti [*mᵢ, nᵢ*] étant définies selon un type de modulation utilisé pour l'émission des données dans la bande fréquentielle disjointe à laquelle une seconde table d'entrelacement est attribuée, des éventuelles différences de dimensions entre des secondes tables d'entrelacement étant susceptibles de générer une ou plusieurs positions dites invalides comprises dans la première table d'entrelacement mais non comprises dans l'une au moins des secondes tables d'entrelacement,
- entrelacer les éléments binaires par décalages successifs des lignes m et des colonnes *n* de la première table T [*m, n]* d'entrelacement, les décalages successifs étant réalisés sous forme de permutations circulaires des éléments binaires respectivement par ligne et par colonne,
- déplacer tout élément binaire détecté comme présent à une position invalide de la première table d'entrelacement vers une position d'une dite seconde table d'entrelacement qui est disponible après l'entrelacement des éléments binaires de la première table d'entrelacement, de sorte que chaque seconde table d'entrelacement comprenne des éléments binaires affectés à l'un desdits groupes de données,
- orienter les éléments binaires de chacun des groupes de données vers une circuiterie électronique configurée pour moduler et transmettre lesdits éléments binaires.

4. Procédé selon la revendication précédente dans lequel l'étape pour entrelacer les éléments binaires, et les dimensions des secondes tables d'entrelacement sont conformes à la recommandation ITU-T G.9903.

5. Procédé selon la revendication précédente, dans lequel ledit réseau de communication par courants porteurs en ligne est un réseau maillé de type G3-PLC.

6. Dispositif noeud (133) destiné à être utilisé dans un réseau de communication (120) par courants porteurs en ligne, le dispositif noeud (133) étant configuré pour communiquer dans une pluralité de bandes fréquentielles disjointes avec un second dispositif noeud (134) dudit réseau (120) et pour appliquer (S1) un mode de transmission en faisant référence à une bande fréquentielle étendue, unique, comprenant au moins deux bandes fréquentielles parmi ladite pluralité de bandes fréquentielles disjointes, chaque bande fréquentielle disjointe comprenant une pluralité de sous-porteuses,
le dispositif noeud (133) étant **caractérisé en ce qu'**il comprend une circuiterie électronique configurée pour :
- répartir (S2) en plusieurs groupes de données, via une opération d'entrelacement, des données à transmettre dans ladite bande fréquentielle étendue unique, chaque groupe étant attribué à une seule desdites au moins deux bandes fréquentielles disjointes, et des données de chacun des groupes étant attribuées à chacune des sous porteuses de la bande fréquentielle à laquelle le groupe est attribué,
- transmettre (S3) les données de chacun des plusieurs groupes de données dans la bande fréquentielle disjointe auquel le groupe est attribué de sorte que la transmission des données soit opérée conjointement sur l'ensemble des sous-porteuses des au moins deux bandes fréquentielles.

7. Dispositif noeud (133) selon la revendication précédente dans lequel lesdites au moins deux bandes fréquentielles disjointes sont parmi le groupe : bande fréquentielle CENELEC A, bande fréquentielle CENELEC B, et bande fréquentielle FCC ou bande fréquentielle ARIB, et dans lequel les dimensions des secondes tables d'entrelacement sont conformes à la recommandation ITU-T G.9903.

8. Réseau de communication (120) par courants porteurs en ligne comprenant une pluralité de dispositifs noeuds selon l'une des revendications 6 et 7.

9. Produit programme d'ordinateur **caractérisé en ce qu'**il comprend des instructions de codes de programme pour exécuter les étapes du procédé selon l'une quelconque des revendications 1 à 5, lorsque ledit programme est exécuté par un processeur.

10. Support de stockage d'informations comprenant un produit programme d'ordinateur selon la revendication précédente.

## Patentansprüche

1. Verfahren zum Übertragen von Daten in einem Powerline-Kommunikationsnetzwerk (120), wobei das Verfahren in einem ersten Netzwerkelementgerät (133) des Netzwerks (120) ausgeführt wird, das so konfiguriert ist, dass es in einer Vielzahl von getrennten Frequenzbändern mit einem zweiten Netzwerkelementgerät (134) des Netzwerks (120) kommuniziert. Dies ist **dadurch gekennzeichnet, dass** das erste Netzwerkelementgerät (133) einen Übertragungsmodus anwendet, der sich auf ein einzelnes, erweitertes Frequenzband (S1) bezieht, das mindestens zwei Frequenzbänder aus der Vielzahl von getrennten Frequenzbändern umfasst. Darüber hinaus umfasst jedes getrennte Frequenzband eine Vielzahl von Unterträgern und das Verfahren selbst umfasst die folgenden Schritte:
- Aufteilung (S2) der Daten, die in dem einzelnen erweiterten Frequenzband zu übertragen sind, über einen Interleaving-Vorgang in mehrere Datengruppen. Jede Gruppe ist dabei einem einzelnen der genannten mindestens zwei getrennten Frequenzbändern zugeordnet und Daten von jeder der Gruppen werden jedem der Unterträger des Frequenzbandes, dem die Gruppe zugewiesen ist, zugeordnet,
- Übertragung (S3) der Daten von jeder der mehreren Datengruppen in dem getrennten Frequenzband, dem die Gruppe zugewiesen ist, so dass die Datenübertragung gemeinsam über alle Unterträger der mindestens zwei Frequenzbänder erfolgt.

2. Verfahren nach dem vorhergehenden Anspruch, bei dem die mindestens zwei getrennten Frequenzbänder aus der folgenden Gruppe sind: Frequenzband CENELEC A, Frequenzband CENELEC B und Frequenzband FCC oder Frequenzband ARIB.

3. Verfahren nach einem der Ansprüche 1 und 2, bei dem der Interleaving-Vorgang der Daten Folgendes umfasst:
- Erhalt einer ersten Interleaving-Tabelle T *[m, n]* an Binärelementen, die für die zu übertragenden Daten repräsentativ sind, wobei die erste Interleaving-Tabelle so viele zweite Interleaving-Tabellen Ti [*mᵢ, nᵢ*] von Binärelementen umfasst wie getrennte Frequenzbänder, die in dem erweiterten Band enthalten sind. Jede zweite Interleaving-Tabelle Ti [*mᵢ, nᵢ*] ist einem einzigen der mindestens zwei getrennten Frequenzbänder des erweiterten Frequenzbandes zugeordnet und die Maße *mᵢ, ni* jeder der zweiten Interleaving-Tabellen Ti [*mᵢ, nᵢ*] sind gemäß einem Modulationstyp definiert, der für die Übertragung von Daten in dem getrennten Frequenzband verwendet wird, dem eine zweite Interleaving-Tabelle zugeordnet ist. Darüber hinaus können eventuelle Unterschiede in den Maßen zwischen den zweiten Interleaving-Tabellen eine oder mehrere sogenannte ungültige Positionen erzeugen, die in der ersten Interleaving-Tabelle enthalten sind, aber nicht in mindestens einer der zweiten Interleaving-Tabellen,
- Interleaving der Binärelemente durch aufeinanderfolgende Verschiebungen der Zeilen *m* und der Spalten *n* der ersten Interleaving-Tabelle T *[m, n],* wobei die aufeinanderfolgenden Verschiebungen in Form von kreisförmigen Permutationen der Binärelemente jeweils pro Zeile und pro Spalte durchgeführt werden,
- Verschiebung jedes Binärelements, bei dem erkannt wird, dass es an einer ungültigen Position ist, von der ersten Interleaving-Tabelle an eine Position einer besagten zweiten Interleaving-Tabelle, die nach dem Interleaving der Binärelemente der ersten Interleaving-Tabelle verfügbar ist. Dadurch soll in jeder zweiten Interleaving-Tabelle Binärelemente enthalten sein, die einer der besagten Datengruppen zugeordnet sind,
- Ausrichtung der Binärelemente jeder der Datengruppen zu einer elektronischen Schaltung, die so konfiguriert ist, dass sie die Binärelemente moduliert und überträgt.

4. Verfahren nach dem vorhergehenden Anspruch, bei dem der Schritt zum Interleaving der Binärelemente und die Maße der zweiten Interleaving-Tabellen der ITU-T G.9903-Empfehlung entsprechen.

5. Verfahren nach dem vorhergehenden Anspruch, bei dem das Powerline-Kommunikationsnetz ein Mesh-Netzwerk vom Typ G3-PLC ist.

6. Netzwerkelementgerät (133) zur Verwendung in einem Powerline-Kommunikationsnetzwerk (120), wobei das Netzwerkelementgerät (133) so konfiguriert ist, dass es in einer Vielzahl von getrennten Frequenzbändern mit einem zweiten Netzwerkelementgerät (134) des Netzwerks (120) kommuniziert und zur Anwendung (S1) eines Übertragungsmodus durch Bezugnahme auf ein einzelnes, erweitertes Frequenzband, das mindestens zwei Frequenzbänder aus der Vielzahl getrennter Frequenzbänder umfasst. Dabei umfasst jedes getrennte Frequenzband eine Vielzahl von Unterträgern und das Netzwerkelementgerät (133) ist **dadurch gekennzeichnet, dass** es eine elektronische Schaltung umfasst, die wie folgt konfiguriert ist:
- Verteilung (S2) von Daten, die in dem einzelnen erweiterten Frequenzband zu übertragen sind, über einen Interleaving-Vorgang in mehrere Datengruppen, wobei jede Gruppe nur einem der mindestens zwei getrennten Frequenzbänder zugewiesen ist und Daten von jeder der Gruppen jedem der Unterträger des Frequenzbandes zugewiesen sind, dem wiederum die Gruppe zugewiesen ist,
- Übertragung (S3) der Daten von jeder der mehreren Datengruppen in dem getrennten Frequenzband, dem die Gruppe zugewiesen ist, so dass die Datenübertragung gemeinsam über alle Unterträger der mindestens zwei Frequenzbänder erfolgt.

7. Netzwerkelementgerät (133) nach dem vorhergehenden Anspruch, bei dem die mindestens zwei getrennten Frequenzbänder aus der folgenden Gruppe sind: Frequenzband CENELEC A, Frequenzband CENELEC B und Frequenzband FCC oder Frequenzband ARIB und bei dem die Maße der zweiten Interleaving-Tabellen der ITU-T G.9903-Empfehlung entsprechen.

8. Powerline-Kommunikationsnetzwerk (120) mit einer Vielzahl von Netzwerkelementgeräten nach einem der Ansprüche 6 oder 7.

9. Computerprogrammprodukt, **dadurch gekennzeichnet, dass** es Anweisungen für Programmcode zum Ausführen der Schritte des Verfahrens nach einem der Ansprüche 1 bis 5 umfasst, wenn das Programm von einem Prozessor ausgeführt wird.

10. Informationsspeichermedium, das ein Computerprogrammprodukt nach dem vorhergehenden Anspruch umfasst.

## Claims

1. Method for transmitting data in a power line communication network (120), the method being executed in a first node device (133) of said network (120) configured so as to communicate in a plurality of separate frequency bands with a second node device (134) of said network (120), **characterized in that** the first node device (133) applies a transmission mode for transmitting by referring to a single extended frequency band (S1) comprising at least two frequency bands from among said plurality of separate frequency bands, each separate frequency band comprising a plurality of subcarriers,
and **in that** the method comprises the following steps:
- distributing (S2) data to be transmitted in said single extended frequency band into a plurality of groups of data via an interleaving operation, each group being assigned to just one of said at least two separate frequency bands, and data in each of the groups being assigned to each of the subcarriers of the frequency band to which the group is assigned,
- transmitting (S3) the data in each of the plurality of groups of data in the separate frequency band to which the group is assigned such that the data transmission is carried out jointly on all of the subcarriers of the at least two frequency bands.

2. Method according to the preceding claim, wherein said at least two separate frequency bands are from among the following group: CENELEC A frequency band, CENELEC B frequency band, and FCC frequency band or ARIB frequency band.

3. Method according to either of claims 1 and 2, wherein the data interleaving operation comprises:
- obtaining a first interleaving table T *[m, n]* of bits representative of the data to be transmitted, the first interleaving table comprising the same number of second interleaving tables Ti [*mᵢ, nᵢ*] of bits as there are separate frequency bands contained in the extended band, each second interleaving table Ti [*mᵢ, nᵢ*] being assigned to just one of the at least two separate frequency bands of the extended frequency band, the dimensions *mᵢ, ni* of each of the second interleaving tables Ti [*mᵢ, nᵢ*] being defined in accordance with a modulation type used for the transmission of the data in the separate frequency band to which a second interleaving table is assigned, any differences in dimensions between second interleaving tables being liable to generate one or more positions that are said to be invalid, contained in the first interleaving table but not contained in at least one of the second interleaving tables,
- interleaving the bits by successively shifting the rows *m* and columns *n* of the first interleaving table T *[m, n],* the successive shifts being performed in the form of circular permutations of the bits respectively by row and by column,
- moving any bit detected as being present at an invalid position of the first interleaving table to a position of a said second interleaving table that is available following the interleaving of the bits of the first interleaving table, such that each second interleaving table comprises bits assigned to one of said groups of data,
- directing the bits of each of the groups of data to electronic circuitry configured so as to modulate and transmit said bits.

4. Method according to the preceding claim, wherein the step for interleaving the bits and the dimensions of the second interleaving tables are in accordance with the ITU-T G.9903 recommendation.

5. Method according to the preceding claim, wherein said power line communication network is a G3-PLC meshed network.

6. Node device (133) intended to be used in a power line communication network (120), the node device (133) being configured so as to communicate in a plurality of separate frequency bands with a second node device (134) of said network (120) and so as to apply (S1) a transmission mode for transmitting by referring to a single extended frequency band comprising at least two frequency bands from among said plurality of separate frequency bands, each separate frequency band comprising a plurality of subcarriers,
the node device (133) being **characterized in that** it comprises electronic circuitry configured so as to:
- distribute (S2) data to be transmitted in said single extended frequency band into a plurality of groups of data via an interleaving operation, each group being assigned to just one of said at least two separate frequency bands, and data in each of the groups being assigned to each of the subcarriers of the frequency band to which the group is assigned,
- transmit (S3) the data in each of the plurality of groups of data in the separate frequency band to which the group is assigned such that the data transmission is carried out jointly on all of the subcarriers of the at least two frequency bands.

7. Node device (133) according to the preceding claim, wherein said at least two separate frequency bands are from among the following group: CENELEC A frequency band, CENELEC B frequency band, and FCC frequency band or ARIB frequency band, and wherein the dimensions of the second interleaving tables are in accordance with the ITU-T G.9903 recommendation.

8. Power line communication network (120) comprising a plurality of node devices according to either of Claims 6 and 7.

9. Computer program product, **characterized in that** it comprises program code instructions for executing the steps of the method according to any one of Claims 1 to 5 when said program is executed by a processor.

10. Information storage medium comprising a computer program product according to the preceding claim.
